# EUROPEAN PATENT SPECIFICATION

(11) **EP 2 916 030 B1**
(45) Date of publication and mention of the grant of the patent: **11.07.2018**
(21) Application number: 14157580.3
(22) Date of filing: 04.03.2014
(51) Int. Cl.: F16F 7/116

(54) **Adjustable tuned mass damper**
Einstellbarer eingestellter Massendämpfer
Amortisseur de masse accordé réglable

(43) Date of publication of application: 09.09.2015
(73) Proprietor: Valmet Technologies, Inc., 02151 Espoo (FI)
(72) Inventor: Haapanen, Jaakko, 04400 Järvenpää (FI)
(74) Representative: Genip Oy

(56) References cited:
- GB-A- 2 501 708
- US-A1- 2011 079 478
- US-B2- 7 527 253

## Description

The present invention relates to an adjustable tuned mass damper comprising a body part and a mass element connected with the body part by at least two spring elements according to the preamble of claim 1.

Vibration is a generally acknowledged problem in various industrial applications. A tuned mass damper is a generally known arrangement for attenuating harmonic vibration.

Particularly in fiber web machines along with the increasing widths and higher speeds of fibre-web machines the vibration of rolls is becoming an ever-increasing problem. The rolls in fibre-web machines are used for instance to guide the travel of the web and/or support fabric. As for the properties of the fibrous web, such operative positions of the rolls, in which the roll is involved in the processing of the web, such as roll nips, calender rolls, counter rolls for coating and winding drums or reeling drums are, however, the more essential. Especially, the winding drums and drums of slitter-winders used for web finishing are challenging objects in terms of vibration, since the winding of customer reels of different sizes and possibly containing various kinds of flaws will easily get disturbed due to excessive vibration.

Vibration is a problem particularly in two-drum or belt-type winders. A vibration problem occurring with two-drum winders arises when the harmonics of the rotational speed of a paper roll produced on drums excites the natural frequencies of the drums. The same type of a vibration problem occurs also with the reeling drums of reel-ups. The resonance vibrations during the operation of a machine or a device are often caused by insufficient damping, i.e. inadequate dynamic stiffness at the resonance frequency. It is often possible to improve the situation by directly modifying the resonating structure in order to increase its damping.

A tuned mass damper may also be adjustable. Publications WO9849394, WO0004227 and WO0004228 disclose solutions, in which an adjustable tuned mass damper is arranged in the bearing housing of a paper machine roll. In the solution according to the publications, the adjustability of the frequency of the vibration to be absorbed is realised by changing the position of the mass on a vibrating rod or alternatively, by changing the magnitude of the mass. Since the absorber is relatively easy to access, the tuning can be changed even during the operation of the machine. However, kind of a solution is very demanding relating to the clearance between the parts of the damper and thus the accuracy of the adjustment.

US 7527253 B2 relates to a spring based actuator for providing power when interfacing robotics onto humans. There are also shown well-known equations relating to bending stiffness of a bending leaf spring and rotation of the leaf spring to alter the moment of inertia. The only context is an energy storage for an actuator for robotic system.

US 2011/079478 A1 discloses a device for reducing vibration and sound in a structure. The device comprises an attachment which is connected to the structure, a rotary bearing connected to the attachment, and at least one spring element which extends along two main axes which are perpendicular to each other. The spring element has different rigidity with respect to the two main axes. Furthermore, the spring element is by means of the rotary bearing rotatable around an axis of rotation, which is perpendicular to the two main axes.

GB 2501708A discloses a micro combined heat and power (mCHP) unit. An anti-vibration device is connected to the mCHP unit. The anti-vibration device may comprise an elongate arm e.g. steel tube with a weight at the free end of the arm. The mass and/or position of weight may be adjustable

It is an object of the invention to provide an adjustable tuned mass damper which provides accurate control of tuning and better overall operation than those of the prior art.

The objects of the invention are mainly achieved adjustable tuned mass damper according to claim 1.

An adjustable tuned mass damper according to the invention comprises a body part and a mass element. The mass element is connected with the body part by at least two spring elements. In the damper at least one of said at least two spring elements is arranged rotatable in respect to the body part and the mass element and said at least one rotatable spring element has its second moment of area different in different directions cross sectional plane at least at one longitudinal location.

The spring element is a bar or a rod-like member. The actual form of the spring element may also vary and it be designed according to any specific needs. The second moment of area, also known as moment of inertia of plane area, area moment of inertia, polar moment of inertia or second area moment, is a geometrical property of an area which reflects how its points are distributed with regard to an arbitrary axis.

This provides an effect of adjusting the stiffness of at least one spring element in the direction of vibration to be attenuated by the mass damper. Since the adjustment is accomplished by rotational movement it is possible to provide accurate tuning.

Mass element may be of any suitable form or material and it may be a unitary block or assembled from several pieces.

According to an embodiment of the invention at least one of said at least two spring elements is arranged non-rotatable in respect to the body part and the mass element. This way the non-rotatable element provides a constant effect to the damping and the adjustment may be performed by one or more rotatable spring elements.

According to an embodiment of the invention all of the spring elements are arranged rotatable. All of the rotatable spring elements have their second moment of area different in different directions at least at one longitudinal location. This provides an effect that adjustability of the damper is improved.

According to an embodiment of the invention comprising several spring element, the combined second moment of area of the at least two spring elements is arranged symmetrical in respect to the bending plane of the elements. Thus it is possible that the spring element have different cross sectional form as long as their combined effect may be equalized in respect to the bending plane.

According to an embodiment of the invention at least one rotatable spring element is provided with an actuator for setting the rotational position of the element. Such an actuator may be realized in many ways as long as the accuracy of the control of the position is adequate.

According to an embodiment of the invention rotational positions of the rotatable spring elements are synchronized with each other. In case the spring elements are identical the movement of all elements in relation to other is 1:1. If the element are different a suitable ratio of the rotational movement may be used to provide symmetrical effect of the elements in respect to the bending plane.

According to an embodiment of the invention rotational positions of the rotatable spring elements are mechanically synchronized with each other.

According to an embodiment of the invention rotational positions of the rotatable spring elements are mechanically synchronized with each other by synchronizing mechanism arranged in the mass element.

According to an embodiment of the invention at least two of the rotatable spring elements are provided with an actuator for setting the rotational position of the element and the rotational positions of said two rotatable spring elements are synchronized with each other by synchronized operation of the actuators.

According to an embodiment of the invention the tuned mass damper comprises a number of rotatable spring elements provided with actuators arranged to toggle between two positions whereas the total second moment of areal of the elements is defined by the aggregate rotational positions of the number of bar elements.

The tuned mass damper according to the invention may be specifically applied to devices where constant control of the damping effect is desired such at rolls at various positions in a paper or board (fiber web) machines and/or fiber web finishing machine such as winder, reel-up, calenders, coaters etc.

In the following the invention and its operation are described with reference to the appended schematic drawings, in which
figure 1 illustrates an adjustable tuned mass damper according to an embodiment of the invention,
figure 2 illustrate a view II-II of figure 1,
figure 3 illustrates an adjustable tuned mass damper according to an embodiment of the invention,
figure 4 illustrate an adjustable tuned mass damper according to another embodiment of the invention,
figure 5 illustrate a view V-V of figure 4,
figure 6 illustrate an adjustable tuned mass damper according to another embodiment of the invention,
figure 7 illustrate an adjustable tuned mass damper according to another embodiment of the invention, and
figure 8 illustrate a view VIII-VIII of figure 7.

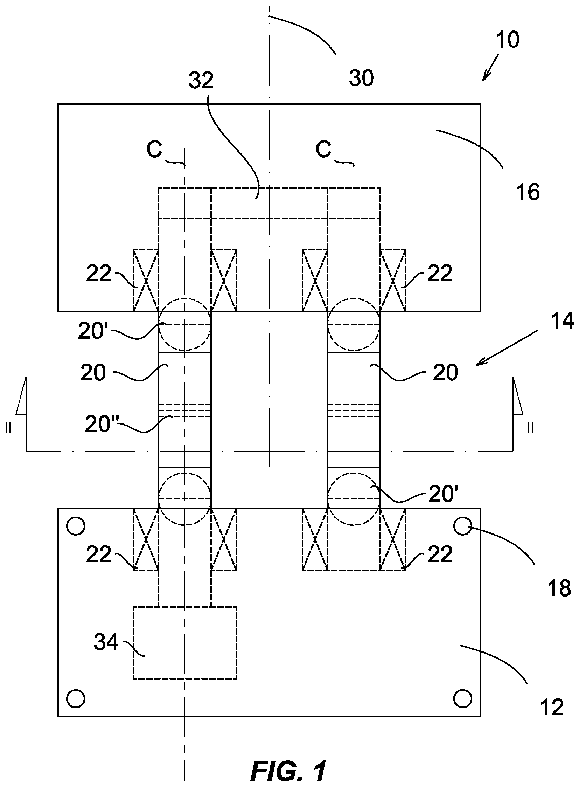

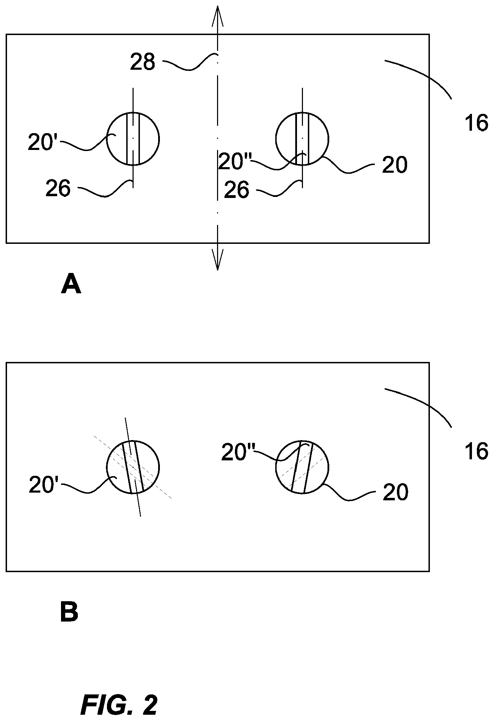

Figure 1 shows an adjustable tuned mass damper 10 according to an embodiment of the invention seen from the top. Figure 2 shows section II-II of figure 1. The damper comprises three main parts a body part 12, suspension part 14 and a mass element 16. The mass element 16 is suspended from the body part 12 by the suspension part so that it may vibrate when excited by vibration of the body part 12. The body part 13 is provided with fastening means 18 by means of which the body part and the damper may be attached to an object the vibration of which is intended to be attenuated by the damper 10.

In the figure the suspension part 14, and thus also the tuned mass damper, comprise two spring elements 20 via which the mass element connected to the body part 12. The damper is intended to damp vibration mainly in the plane formed by center line 30 and direction perpendicular to the plane of the view. The spring elements are bar-like members arranged rotatable around their center axis C in respect to the body part 12 and mass element 16. At the both ends of both of the spring elements there are provided an end portion 20' having a circular cross section at least for arranging a suitable bearing 22 arrangement facilitating a controlled rotational movement around the axis C. By means of the bearing arrangements the connection between the body part, spring elements and the mass element is substantially free of play i.e. the clearances are so small that the parts are practically fixed with each other. These portions have constant second moment of area irrespective the rotational position or direction in the plane of its cross section. Thus the rotational position of the element does not have effect on its stiffness at these portions.

The spring element is additionally provided with a second portion 20" at the region at a longitudinal location between the end portions 20' which has its cross sectional form such that its second moment of area depends on the direction in the plane of cross section. In other words the spring elements have their second moment of area different in different cross sectional directions at least at one longitudinal location which location is between body part and the mass element. This provides an effect of having different bending stiffness in different directions.

In the embodiment of figure 1 the cross section of the end portion 20' is circular and the cross section of the second portion 20" is rectangular having a length of its two opposite sides at least twice the length of other sides thereof. In figure 2A there is shown a position of the spring elements 20 where the direction of main axis of inertia 26 coincides with the main direction of vibration 28. In figure 2B there are show two different rotational positions of the spring elements 20. In the figure 1 the spring elements 20 are identical of their free portion between the body part and mass element.

The mass element and the spring elements are arranged so that its mass is divided symmetrically in respect of the center line 30. The vibrational behavior or tuning of the damper may be adjusted be rotating the spring elements around their longitudinal axes C. In the embodiment of figure 1 there is an actuator 34 coupled to one of the spring element, by mean means of which the spring element may be rotated to a desired rotational position in continuous manner. Advantageously the rotational positions of the spring elements are such that their effect is symmetrical in relation to axis 30 and the main bending plane of the spring elements. The bending plane means a plane along which a certain point of the spring elements moves during the bending. To accomplish that the rotational positions of the spring element are synchronized with each other. The synchronization is preferably accomplished by a mechanical synchronizing device 32 which couples the spring elements rotationally with each other. The synchronizing means may be e.g. a gear system or a belt drive or alike. As is shown in figure 1 the synchronizing device 32 is positioned in connection with the mass element 16.

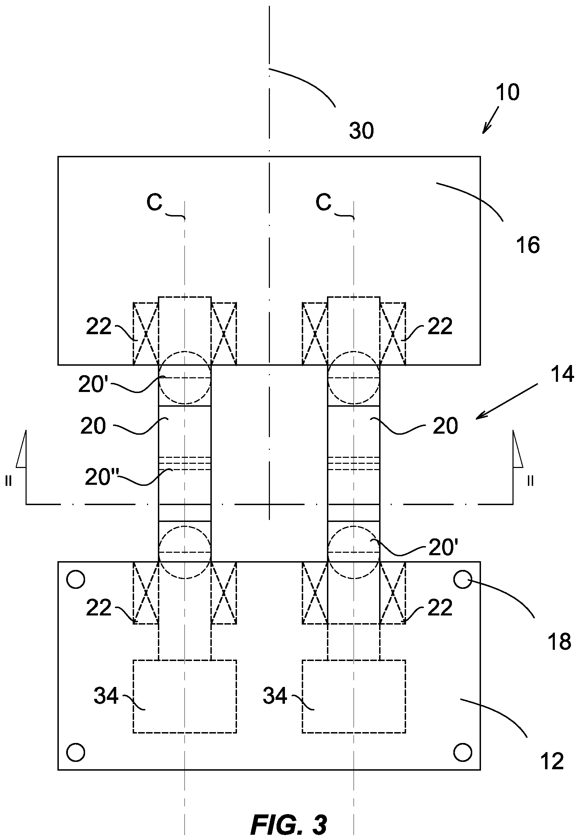

In figure 3 there is shown an embodiment similar to that in figure 1 except that the both of the spring elements are provided with individual actuators only, i.e. no mechanical synchronized. In this case synchronization of the positions of the spring elements is accomplished by synchronizing the actuators of the spring elements. In case the damper would comprise e.g. four spring elements it is possible to provide two spring elements with individual actuators and synchronized two spring elements mechanically with the ones having the actuators. When the synchronization is accomplished individually the spring elements may actually be different provided that their effect is arranged symmetrical in relation to axis 30 by selecting the rotational position of each spring element suitably.

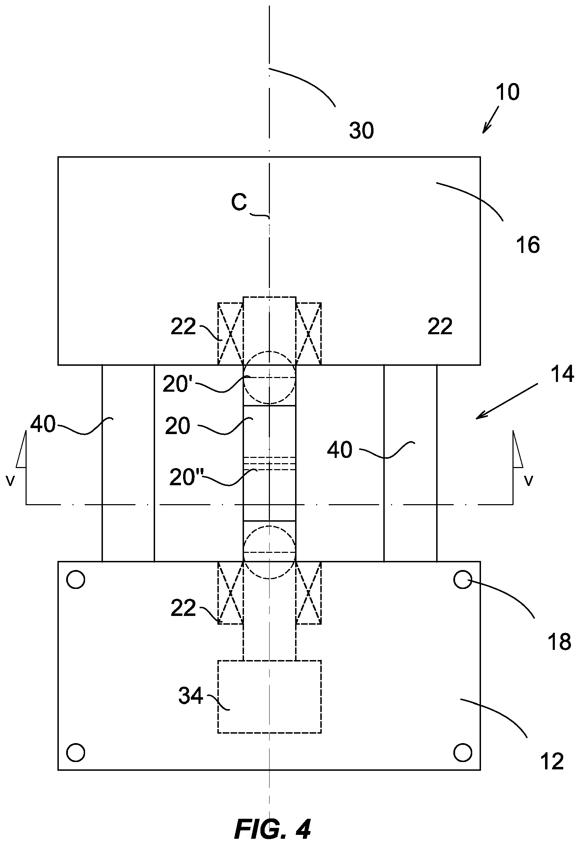

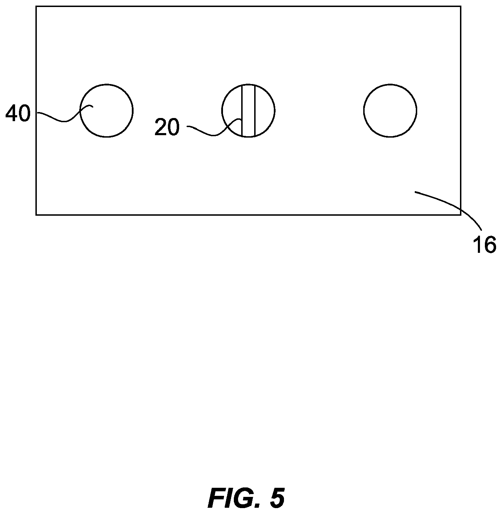

In figure 4 and figure 5 showing a view V-V of figure 4 there is shown an embodiment of the invention depicting that the damper may simultaneously comprise non-rotatable spring elements 40 and rotatable spring elements 20. The non-rotatable i.e. fixed spring elements 40 provide a certain constant effect to the mass damper whereas the rotatable spring elements 20 provide an adjustable fine tuning of the damper. Particularly since the embodiment of figure 4 shows only one rotatable spring element 40 the fixed spring elements 40 operates also a guiding system to guide the body part during the operations. In fact, the invention may be realized also so that the damper comprises only one rotatable spring element 20 combined with mechanical guiding means for guiding the body part 12 during the operation.

In the embodiments of figures 1-5 the adjustment i.e. the rotational position is show to be continuous i.e. any position between 0 - 90 degree may be selected according to need. The damper 10, particularly the actuator 34 may be connected to a control system which set suitable position according to instructions provided.

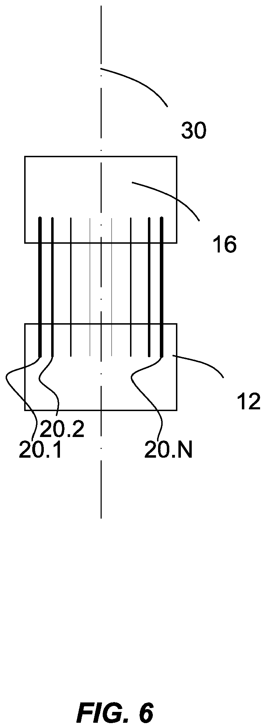

In figure 6 there is shown schematically how the damper may have several spring elements 20.1 - 20.N the rotational position of which may be individually set. The elements may be similar or different for example for rough and fine tuning purposes which is depicted by different line thickness in the figure. It is also conceivable that the mass damper comprises a number of rotatable spring elements 20.1 - 20.N provided with actuators arranged to toggle between two positions whereas the total second moment of areal of the elements is defined by the aggregate rotational positions of the number of bar elements.

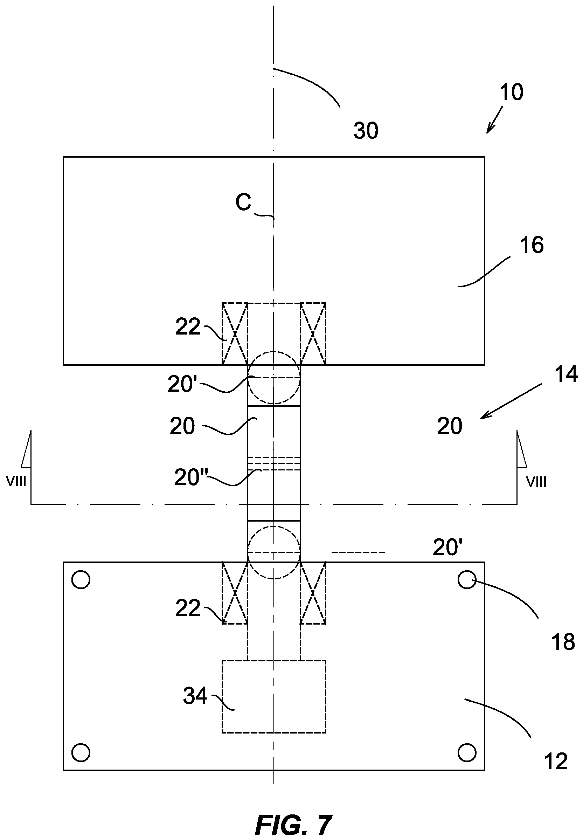

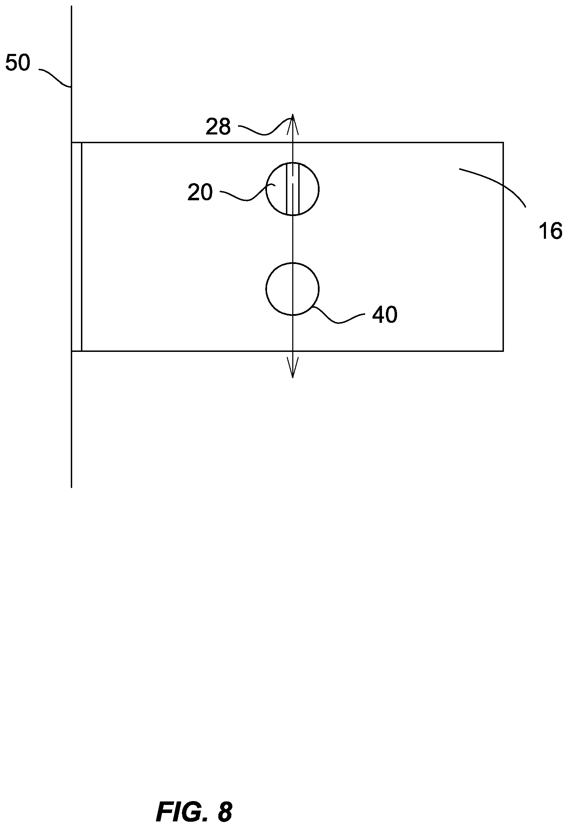

In figure 7 and figure 8 showing a view VIII-VIII of figure 4 there is shown an embodiment of the invention comprising one spring element 20 which is arranged rotatable in respect to the body part 12 and the mass element 16 and one non-rotatable spring element 40. The non-rotatable i.e. fixed spring elements 40 provide a certain constant effect to the mass damper whereas the rotatable spring elements 20 provide an adjustable fine tuning of the damper. In this embodiment, if the main axis of second moment of area of the rotatable spring element 20 has a position other than 0 or 90 degrees in respect to the direction of the vibration 28 its behavior is not symmetrical and therefore the damper may be provided with a guide 50 which guides the movement of the mass element. On the other hand this embodiment may be adjusted to have two positions which have different tuning and still having symmetrical behavior.

It should be noted that only a few of the most preferable embodiments are disclosed above. The features disclosed in connection with various embodiments can also be used in connection with other embodiments within the inventive scope and/or different embodiments can be combined from the disclosed features, should it be desired and should it be technically feasible.

## Claims

1. An adjustable tuned mass damper (10) comprising a body part (12) and a mass element (16) connected with the body part by a spring element having its second moment of area different in different directions at least at one longitudinal location, and being arranged rotatable in respect to the body part (12) and the mass element (16), **characterized in that** the tuned mass damper (10) comprises at least two spring elements (20,40) arranged rotatable in respect to the body part and the mass element, and that the combined second moment of area of the at least two spring elements is arranged symmetrical in respect to the bending plane of the spring elements (20,40).

2. An adjustable tuned mass damper (10) according to claim 1, **characterized in that** at least one of said at least two spring elements (40) is arranged non-rotatable in respect to the body part (12) and the mass element (16).

3. An adjustable tuned mass damper (10) according to claim 1, **characterized in that** all of the spring elements are arranged rotatable and that all of the rotatable spring elements (20) have their second moment of area different in different directions at least at one longitudinal location.

4. An adjustable tuned mass damper (10) according to claim 1, **characterized in that** at least one rotatable spring element is provided with an actuator for setting the rotational position of the element.

5. An adjustable tuned mass damper (10) according to claim 1 or 4, **characterized in that** rotational positions of the rotatable spring elements are synchronized with each other.

6. An adjustable tuned mass damper (10) according to claim 5, **characterized in that** rotational positions of the rotatable spring elements are mechanically synchronized with each other.

7. An adjustable tuned mass damper (10) according to claim 5, **characterized in that** rotational positions of the rotatable spring elements are mechanically synchronized with each other by synchronizing mechanism arranged in the mass element.

8. An adjustable tuned mass damper (10) according to claim 5, **characterized in that** at least two of the rotatable spring elements are provided with an actuator for setting the rotational position of the element and that the rotational positions of said two rotatable spring elements are synchronized with each other by synchronized operation of the actuators.

9. An adjustable tuned mass damper (10) according to claim 4, **characterized in that** the tuned mass damper comprises a number of rotatable spring elements provided with actuators arranged to toggle between two positions whereas the total second moment of areal of the elements is defined by the aggregate rotational positions of the number of spring elements.

## Patentansprüche

1. Einstellbarer abgestimmter Dämpfer (10), der einen Körperteil (12) und ein Massenelement (16) umfasst, das mit dem Körperteil durch ein Federelement verbunden ist, dessen zweites Flächenmoment sich in unterschiedlichen Richtungen zumindest an einer Längsposition unterscheidet und der in Bezug auf den Körperteil (12) und das Massenelement (16) drehbar angeordnet ist,
**dadurch gekennzeichnet, dass** der abgestimmte Dämpfer (10) mindestens zwei Federelemente (20, 40) umfasst, die drehbar in Bezug auf den Körperteil und das Massenelement angeordnet sind, und dass das kombinierte zweite Flächenmoment der mindestens zwei Federelemente symmetrisch in Bezug auf die Biegeebene der Federelemente (20, 40) angeordnet ist.

2. Einstellbarer abgestimmter Dämpfer (10) nach Anspruch 1, **dadurch gekennzeichnet, dass** mindestens eines der mindestens zwei Federelemente (40) in Bezug auf den Körperteil (12) und das Massenelement (16) nicht drehbar angeordnet ist.

3. Einstellbarer abgestimmter Dämpfer (10) nach Anspruch 1, **dadurch gekennzeichnet, dass** alle Federelemente drehbar angeordnet sind und dass alle drehbaren Federelemente (20) ein zweites Flächenmoment haben, das in verschiedenen Richtungen zumindest an einer Längsposition unterschiedlich ist.

4. Einstellbarer abgestimmter Dämpfer (10) nach Anspruch 1, **dadurch gekennzeichnet, dass** mindestens ein drehbares Federelement mit einem Stellglied zum Einstellen der Drehposition des Elementes versehen ist.

5. Einstellbarer abgestimmter Dämpfer (10) nach Anspruch 1 oder 4, **dadurch gekennzeichnet, dass** Drehpositionen der drehbaren Federelemente untereinander synchronisiert sind.

6. Einstellbarer abgestimmter Dämpfer (10) nach Anspruch 5, **dadurch gekennzeichnet, dass** Drehpositionen der drehbaren Federelemente mechanisch untereinander synchronisiert sind.

7. Einstellbarer abgestimmter Dämpfer (10) nach Anspruch 5, **dadurch gekennzeichnet, dass** Drehpositionen der drehbaren Federelemente mechanisch untereinander durch Synchronisieren des Mechanismus, der im Massenelement angeordnet ist, synchronisiert sind.

8. Einstellbarer abgestimmter Dämpfer (10) nach Anspruch 5, **dadurch gekennzeichnet, dass** mindestens zwei der drehbaren Federelemente mit einem Stellglied zum Einstellen der Drehposition des Elementes versehen sind und dass die Drehpositionen der zwei drehbaren Federelemente miteinander durch synchronisierten Betrieb der Stellglieder synchronisiert werden.

9. Einstellbarer abgestimmter Dämpfer (10) nach Anspruch 4, **dadurch gekennzeichnet, dass** der abgestimmte Dämpfer eine Anzahl von drehbaren Federelementen umfasst, die mit Stellgliedern versehen sind, welche dafür ausgelegt sind, zwischen zwei Positionen zu wechseln, während das gesamte zweite Flächenmoment der Elemente durch die aggregierten Drehpositionen der Anzahl der Federelemente definiert wird.

## Revendications

1. Amortisseur à masse accordée réglable (10) comprenant une partie de corps (12) et un élément de masse (16) relié à la partie de corps par un élément à ressort dont le deuxième moment d'inertie est différent dans des directions différentes à au moins un emplacement longitudinal, tout en étant disposé de façon rotative par rapport à la partie de corps (12) et à l'élément de masse (16),
**caractérisé en ce que** l'amortisseur à masse accordée réglable (10) comprend au moins deux éléments de ressort (20, 40) disposés de façon rotative par rapport à la partie de corps et à l'élément de masse, et **en ce que** le deuxième moment d'inertie combiné des au moins deux éléments de ressort est disposé de façon symétrique par rapport au plan de flexion des éléments de ressort (20, 40).

2. Amortisseur à masse accordée réglable (10) selon la revendication 1, **caractérisé en ce qu'**au moins l'un desdits éléments de ressort (40) est disposé de façon non rotative par rapport à la partie de corps (12) et à l'élément de masse (16) .

3. Amortisseur à masse accordée réglable (10) selon la revendication 1, **caractérisé en ce que** tous les éléments de ressort sont disposés de façon rotative et **en ce que** le deuxième moment d'inertie de tous les éléments de ressort rotatifs (20) est différent dans des directions différentes à au moins un emplacement longitudinal.

4. Amortisseur à masse accordée réglable (10) selon la revendication 1, **caractérisé en ce qu'**au moins un élément de ressort rotatif est pourvu d'un actionneur pour le réglage de la position rotative de l'élément.

5. Amortisseur à masse accordée réglable (10) selon la revendication 1 ou 4, **caractérisé en ce que** les positions rotatives des éléments de ressort rotatifs sont synchronisées les unes avec les autres.

6. Amortisseur à masse accordée réglable (10) selon la revendication 5, **caractérisé en ce que** les positions rotatives des éléments de ressort rotatifs sont synchronisées mécaniquement les unes avec les autres.

7. Amortisseur à masse accordée réglable (10) selon la revendication 5, **caractérisé en ce que** les positions rotatives des éléments de ressort rotatifs sont synchronisées mécaniquement les unes avec les autres par un mécanisme de synchronisation disposé dans l'élément de masse.

8. Amortisseur à masse accordée réglable (10) selon la revendication 5, **caractérisé en ce qu'**au moins deux des éléments de ressort rotatifs sont pourvus d'un actionneur pour le réglage de la position rotative de l'élément, et **en ce que** les positions rotatives desdits deux éléments de ressort rotatifs sont synchronisées les unes avec les autres par un fonctionnement synchronisé des actionneurs.

9. Amortisseur à masse accordée réglable (10) selon la revendication 4, **caractérisé en ce que** l'amortisseur à masse accordée comprend un nombre d'éléments de ressort rotatifs pourvus d'actionneurs conçus pour basculer entre deux positions, tandis que le deuxième moment d'inertie total des éléments est défini par les positions rotatives agrégées du nombre d'éléments de ressort.
